# EUROPEAN PATENT SPECIFICATION

(11) **EP 0 906 527 B1**
(45) Date of publication and mention of the grant of the patent: **01.09.1999**
(21) Application number: 97912065.6
(22) Date of filing: 21.10.1997
(51) Int. Cl.: F16J 9/26

(54) **PISTON RINGS AND/OR A PISTON IN AN INTERNAL COMBUSTION ENGINE OF THE DIESEL TYPE AND A METHOD OF RUNNING-IN OF A DIESEL ENGINE**
KOLBENRING UND/ODER KOLBEN FÜR DIESELMOTOR UND EINLAUFENSVERFAHREN EINES DIESELMOTORS
SEGMENTS DE PISTON ET/OU PISTON D'UN MOTEUR A COMBUSTION INTERNE DE TYPE DIESEL, ET PROCEDE DE RODAGE D'UN MOTEUR DIESEL

(30) Priority: 28.10.1996 DK 119396; 09.12.1996 DK 141096
(43) Date of publication of application: 07.04.1999
(73) Proprietor: MAN B&W DIESEL A/S, 2450 Copenhagen SV (DK)
(72) Inventor: MOCZULSKI, Lech, DK-2650 Hvidovre (DK)
(74) Representative: Indahl, Peter Jensen
(86) International application number: DK9700459
(87) International publication number: WO9819084

(56) References cited:
- EP-A- 0 126 323
- GB-A- 983 120
- US-A- 5 239 955
- PATENT ABSTRACTS OF JAPAN, Vol. 13, No. 100; & JP,A,63 289 374 (RIKEN CORP), 25 November 1988.

## Description

The present invention relates to piston rings and/or a piston in an internal combustion engine of the diesel type, particularly a two-stroke crosshead engine, the maximum combustion pressure of which at full load exceeds 135 bar, and in which the piston is provided with several, such as from three to five, piston rings and is moved in a reciprocating movement in a cylinder liner with a stroke of at least 750 mm, the piston rings having an external diameter of at least 250 mm in an assembled condition in annular grooves each of which is higher in the axial direction than the ring height, and each piston ring having a radial outer surface sliding along the inner surface of the liner.

The very newest two-stroke crosshead engines of the diesel type are designed for operation at very high maximum combustion pressures of more than 135 bar. These high pressures generate very high loads on the piston rings, partly because the differential pressures across the rings necessarily become high when from three to five rings have to prevent the pressure in the combustion chamber from spreading down below the piston, partly because the high pressures generated by the compression and the combustion are accompanied by very high temperatures that have a negative effect on the tribological conditions so that the piston rings and the liner are more easily exposed to seizures which damage the piston rings and the liner. To seal against the high pressures, the abutment pressures of the piston rings against the inner surface of the liner have to be high. This leads to a greater tendency for the piston rings to penetrate through the lubricating oil film and in areas to run dry against the inner surface of the liner.

The difficult lubrication conditions may moreover be aggravated by the fact that for environmental reasons the engines are operated on fuel which is very low in sulphur or completely free from sulphur. Formerly, the fuel and the lubricating oil always contained sulphur in relatively large amounts, which helped to maintain good tribological conditions because sulphur is a fine lubricant.

From small, four-stroke engines it is known, for example, to provide the piston rings of an internal combustion engine with a coating which contains solid-state lubricants. Thus, DE-A 1 771 640 teaches that a wearing layer of molybdenum sprayed on piston rings can be modified by incorporating nickel-encircled particles of MoS₂ in the wearing layer so as to counteract the heavily wearing effect on the cylinder liner which has been observed in wearing layers consisting exclusively of sprayed-on molybdenum. US 5,239,955 describes a piston skirt having a solid film lubricant comprising graphite and MoS₂ in a resin, such as a thermoset epoxy. At starting of the engine some of the solid film lubricant is transferred to the inner surface of the cylinder wall, and the lubricant remains on both the piston and the cylinder wall during the continued operation of the engine. JP A 63-289374 describes a piston ring having a hard nitridated wear layer and a very thin outer layer of a solid-state lubricant in a metal substrate, iron or Ni. The thickness of the outer layer is less than 0.02 mm, and thus the layer is worn off after some few piston strokes. GB 938,120 suggests as a solution to the problems of running-in piston rings that the outer surface of the piston rings be provided with a sprayed-on coating which has a thickness of 0.025 to 0.125 mm and includes a binder, a hard abrasive and a lubricant, such as aluminium oxide and graphite bound in a resin. A cylinder member is known from EP A2 0 126 323, having a running-in layer of such a hardness and wear resistance that at least 1000 operating hours are required in order to wear off the running-in layer. The prior art provides the teaching that hard wear resistant components is to be included in running-in layers.

Conditions in the large engines relevant to the invention with high maximum pressures differ substantially from the conditions in four-stroke engines where, for petrol engines, maximum pressures in the order of 40 bar, and for diesel engines, maximum pressures the order of 80 bar are used. Furthermore, the engine block, pistons and piston rings of the four-stroke engines are made of light metal while the cylinder liners, the pistons and the piston rings of the large engines are normally made of cast iron, cast steel or steel to be able to withstand the large pressure and temperature influences. The differences in the materials used render it difficult to compare properties for sprayed coatings with each other since the tribological conditions, adhesion conditions, reactions to thermal influences, etc., differ considerably between cast iron and steel on one hand and light metals, such as aluminium, on the other hand.

In the running-in of large crosshead engines of the diesel type, the maximum combustion pressure of which at full load exceeds 135 bar, great problems have occurred with seizures on the inner surface of the liner and on the outer surfaces of the piston rings. In a number of cases it has been necessary to replace the piston rings and to post-machine the liner before the running-in was completed. In some cases it has even been necessary to replace the piston rings several times before the engine could be fully loaded. Apart from the time and cost consuming aspects, such requirements also interfere with the initial adjustment of the engine which must be made during the running-in.

The object of the invention is to provide piston rings and/or pistons which render it possible to carry out a faster and less problematic running-in of the relevant engines by protecting at least the piston rings and preferably also the piston against seizures, at least until the engine is loaded at full load.

In view of this object the piston rings and/or the piston according to the present invention are characterized in that in a newly manufactured state the radial outer surface of the piston rings and/or a section of the radial outer surface of the piston is/are provided with a running-in layer comprising a solid-state lubricant and a metallic binder, that the running-in layer has a thickness of at least 0.1 mm in the radial direction and is made of a material which, stated in percentage by weight and apart from commonly occurring impurities, includes from 5 to 60% of solid-state lubricant, such as graphite, and 40 to 95% of the metallic binder, such as Ni, Al, Si, and optionally up to 15% of an organic binder, and that the macro-hardness of the running-in layer is less than 300 HV30.

During the initial running-in of the piston rings the radial outer surfaces of the rings are ground-in to a facetted shape. Because the annular grooves are higher than the rings, the latter are free to move axially in the pertaining annular groove, and under the influence of the large pressure differences across the rings, the rings will tilt or be slightly twisted in the grooves so that the outer surfaces of the rings form a varying angle with the inner surface of the liner during the reciprocating movement of the piston. The first many times that the rings tilt, their top or bottom edges will abut the inner surface of the liner with a very small area and associated extremely high surface pressures resulting in rapid wearing away of the ring material, presumably because the ring edges momentarily penetrate through the oil film on the inner surface of the liner. As the rings attain the facetted shape, the abutment area is increased and the surface pressure is reduced to below the limit where the oil film is penetrated.

If during this grinding-in the lubrication between the outer surfaces of the piston rings and the inner surface of the liner is so poor that the friction between the mutually sliding surfaces generates high temperatures, a beginning seizure emerges in the abutment area of the piston ring against the liner. Once the seizure has emerged in a local area, the very rough surface formed on the piston ring will increase the friction, so that the excessive temperature level is maintained and the seizure will spread to a larger area on the piston ring until it is completely rejectable. The rough seizure area on the piston ring can also cause seizures on the inner surface of the liner, and these also contribute to the increased temperature level.

Because the abutment pressure increases when the engine load and thus the maximum pressure are increased, it is substantial that the running-in layer protects against the emergence of seizures until the engine has been operated at full load for a period that permits the grinding-in of the facets on the outer ring surface to be completed. To achieve this the running-in layer must have a thickness of at least 0.1 mm. It is possible to use considerably thicker running-in layers, such as layers of a thickness of 0.13, 0.15, 0.19 or 0.25 mm or even 1 or 2 mm or thicker because in the first round the facets are ground into the running-in layer, whereupon the facets in the last part of or following conclusion of the running-in are slowly ground into the underlying, substantially harder piston ring material. This completion of the grinding-in with simultaneous removal of the running-in layer takes place at a time when the abutment area of the ring against the liner is so large that the lubricating oil film is not penetrated.

It is substantial for the invention that the running-in layer is soft with a macro-hardness of less than 300 HV30. In the current large engines with high maximum pressures it has so far been a firm assumption that the outer surfaces of the piston rings had to consist of a hard material, at least during the part of the running-in period when the engine load was raised to more than 50%. With this invention it has been recognized that the piston rings with a soft running-in layer are well capable of withstanding the large influences occurring in the upper load area for the engine, and that the facet grinding-in can advantageously be effected in a soft material which is ground more rapidly into the facetted shape.

The content of the running-in layer of from 5 to 60% of a solid-state lubricant ensures maintenance of sufficient lubrication while the initial grinding-in takes place until the abutment area becomes sufficiently large for the piston ring not to penetrate through the oil film. If there is less than 5% of the solid-state lubricant the tribological conditions become too poor, and if the content is higher than 60% it is difficult to bind the lubricant sufficiently well to the outer surface of the piston ring. Graphite is preferred as the solid-state lubricant, but it is also possible to use other well-known lubricants, such as MoS₂, LiF and CaF₂, and mixtures thereof. As a metallic binder, Ni or Al is preferred, both being soft metals, but other soft metals, such as Cu, Ag, Si and/or Zn, can also be used.

In a preferred embodiment, the running-in layer is thermally sprayed on a cast piston ring or piston blank of steel, cast steel or cast iron. The thermal spraying is a very well-known process with a high performance and can be used for application of coatings of very varying compositions. The thermally sprayed coatings can also be made to adhere suitably well to the surface of steel or cast iron. As an alternative to thermal spraying, the coating can be applied by immersion in a melting bath of the desired running-in layer, but in this method of application it may be more difficult to control the thermal influence on the piston rings or the piston.

It is well-known to provide a cast piston ring blank with a hard wearing layer to prolong the life of the rings. Reference may be made to piston rings of cast iron which are provided by the Swedish company DAROS AB with hard wearing coatings of the commercial designations PM2, PM10 or PM14. These coatings contain particles with micro-hardnesses exceeding 1800 HV and are thermally sprayed on the outer ring surface. To prevent these very hard particles from causing seizures on the cylinder liner, the outer surface of the coating is polished. Owing to the manufacturing tolerances of the cylinder liner and the piston rings, the newly manufactured piston rings will usually not fully abut the liner over the full circumference. The seal between the piston ring and the liner can be improved by applying a very thin coating of copper or pure graphite on the hardfaced and polished outer ring surface. At the places where the liner and the piston ring abut each other, this thin coating is worn away after a couple of piston strokes, while it may remain for a little longer and seal in places where the fit between the ring and the liner is not completely accurate. If it is desired to apply a running-in layer according to the invention on such a cast piston ring member of steel, cast steel or cast iron, which has been coated with a wearing layer of a material having a micro-hardness exceeding 1200 HV at certain points, then preferably the surface roughness produced by the spraying of the wearing layer is maintained until the running-in layer has been sprayed on to the wearing layer. Naturally it is an advantageous simplification of the manufacturing process that the polishing of the sprayed wearing layer can be omitted, but it is more substantial that the running-in layer, to achieve the desired effect, must adhere securely on the outer surface of the piston ring, which is difficult to obtain on a polished hard surface. At insufficient adhesion the running-in layer may in areas break off in flakes before the desired facetted grinding-in has taken place.

It is well-known that also the piston may be subject to seizures at the running-in. It is therefore preferred that at the upper section of the radial outer piston surface located between the annular groove for the top piston ring and the piston top, the cast piston blank of steel, cast steel or cast iron is provided with a thermally sprayed-on layer with an aggregate layer thickness ranging from 0.1 to 5 mm, of which the running-in layer constitutes the outermost part of the layer. By building up the sprayed layer to a thickness which is substantially larger than what is needed for the running-in layer itself, the annular space between the piston and the inner surface of the cylinder liner in the area above the top piston ring is filled by the self-lubricating material, which is unable to cause seizures at contact with the inner surface of the cylinder lining. The filling-in of this annular space provides the further advantage that the top piston ring is protected against the very high temperature level prevailing in the combustion chamber. The high temperatures have a negative influence on the lubrication conditions because the lubricating oil film is more easily broken at high temperatures. Thus, the embodiment provides an advantageous improvement of the lubrication conditions around the top piston ring, which reduces the risk of seizures, both during the running-in and also at the subsequent normal engine operation.

In a further embodiment the cast piston blank of steel or cast iron is provided with the thermally sprayed-on running-in layer on the lower section of the radial outer surface located between the annular groove of the bottom piston ring and the lower end of the piston. In this connection it should be understood that the piston may include a piston skirt, which is a lower piston portion bolted on and extending down to the lower end of the piston. In this lower section typically located on the piston skirt, the piston may touch the inner surface of the cylinder liner. By providing this section with a running-in layer, seizure formations on the piston are counteracted during the running-in when the inner surface of the cylinder liner is relatively rough. As the highest points are worn away from the inner surface of the cylinder liner, the risk of seizure damage to the piston is reduced, and it is therefore sufficient to apply a running-in layer proper on the lower piston section.

It is possible only to apply the running-in layer on the piston rings, but preferably all piston rings are coated with the running-in layer and the piston is coated with the running-in layer at least in its lower section located below the annular groove for the bottom piston ring, since this renders it possible to carry out a more rapid running-in of the engine because the risk of seizure damage to the piston and the piston rings is thus considerably reduced.

The present invention further relates to a method for running-in of a two-stroke crosshead engine of the diesel type, the maximum combustion pressure of which at full load exceeds 100 bar, and in which, in respect of at least one of the cylinders, the engine has a cylinder liner in which a piston with several newly manufactured piston rings is movable in a reciprocating movement with a stroke of at least 750 mm, each piston ring having an external diameter of at least 250 mm and a radial outer surface abutting the inner surface of the liner.

The known method for running-in of such an engine typically extends over many hours during which the engine load is gradually stepped up with intermediate engine stoppages for inspection of the piston rings for seizures before the load is increased. Normally the engine is started with half an hour's operation at about 15% load, whereupon the piston rings are inspected. Then the engine is started up again and is run stepwise to about 40% load over a couple of hours, and after renewed stoppage of the engine for 30 minutes, the engine is started and is run stepwise up to 90% load over at least three hours, whereupon the load is increased to 100%. Thus the engine is brought to full load for the first time after an aggregate operating period of at least 6 hours, whereupon it is stopped and renewed inspection is carried out. Despite this slow running-in, considerable problems with seizures of the piston rings have been observed for the newest engines as mentioned above. When it has been necessary to mount new piston rings, the running-in procedure has had to be repeated from the beginning.

The method according to the invention is characterized in that the engine is started and brought up to full load within an aggregate operating period of at the most three hours, during which period at least part of a running-in layer, which is positioned on the radial outer surface of the newly manufactured piston rings and/or a section of the radial outer surface of the piston before start of the engine, is transferred to the inner surface of the liner, and which, before start of the engine, has a thickness in the radial direction of at least 0.1 mm and is made of a material having a macro-hardness of less than 300 HV30. When newly-manufactured piston rings are mounted in a newly-manufactured cylinder liner, the engine can be brought to full load at which the maximum combustion pressure exceeds 135 bar within the aggregate operating period of at the most three hours.

The soft, suitably thick running-in layer renders possible a running-in sequence in which the load is substantially more rapidly increased to full load while at the same time the risk of seizure damage is substantially smaller than in the known engines of the type in question. The more rapid and more safe running-in provides a substantial saving in the time spent in connection with preparation of the engine. At the same time it becomes possible to a higher extent to concentrate the running-in on the adjustments of the engine components which necessarily must be made, such as adjustment of the injection sequence for the fuel and of the turbocharger system.

In addition to the fact that the soft running-in layer provides a more rapid grinding of the facets on the outer surfaces of the piston rings, the ground-off material is deposited on the inner surface of the liner, particularly in its top section. This is because the pressure in the combustion chamber is highest during the part of the engine cycle when the piston moves the first 20° turn of the crankshaft down from its top dead centre, and the grinding takes place when the pressure is high. The deposited material on the inner surface of the liner helps to provide seizure-preventing lubrication conditions, and the deposits in the top area of the cylinder liner helps in the very area where it is most difficult for the lubricating oil-based lubrication to function because the temperature is high. The invention renders it possible to use a cylinder liner the inner surface of which is made of a sprayed wearing layer. It is also possible to apply the invention on an engine where the inner surface of the liner is provided with a running-in layer of soft material applied on top of the hard wearing layer.

Preferably the engine is brought to full load within an aggregate operating period of at the most 90 minutes, which largely corresponds to the operating period required in consideration of the engine bearings and adjustment of the engine components. Thus, this running-in sequence is not determined by considerations of avoiding seizures on the cylinder components.

The piston rings of a diesel engine are worn gradually and have a shorter life than the cylinder liners. When the piston rings in a cylinder in the known engines have to be replaced, it is necessary to perform a running-in with gradually increasing loads over many hours, such as over 6 hours. This typically takes place on a ship which is desired to observe a predetermined sailing schedule, and where delays may inflict heavy costs, typically of USD 25,000-40,000 per day, on the shipowner. It is obviously advantageous to be able to reduce the running-in time required after mounting of a new set of piston rings on a cylinder in the engine.

The method according to the invention makes possible that a piston with several newly-manufactured piston rings is mounted in a formerly used cylinder liner, and that the engine is started and brought to full load within an aggregate operating period of one hour at the most. With such a short running-in period for new piston rings replacement of the rings during quite an ordinary port stay causes no problems, the running-in period being shorter than the period normally spent from the engine is started and until the full load sailing command is given.

Examples of the invention will now be described in more detail with reference to the highly schematic drawing, in which
Fig. 1 shows a longitudinal sectional view through the upper part of a cylinder liner where the piston with the piston rings is in the upper dead centre,
Fig. 2 is a cross-sectional view through a piston ring coated with a running-in layer direct on the cast ring material,
Fig. 3 is a cross-sectional view through another embodiment of a piston ring coated with a running-in layer on the outside of a hard wearing layer sprayed on the cast ring material,
Fig. 4 shows a segmental side view of a piston according to the invention, and
Fig. 5 is a diagram of an example of a method according to the invention for running-in of an engine.

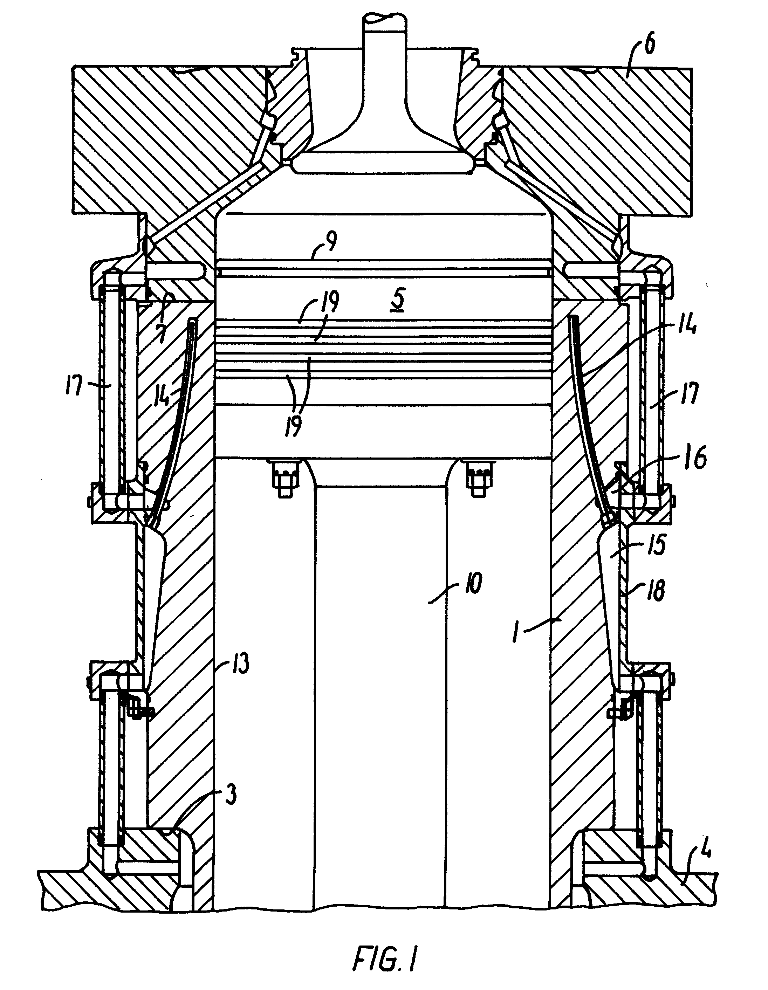

Fig. 1 shows the upper section of a cylinder liner generally designated 1 for a large two-stroke crosshead engine that can be used as a stationary engine for operation of a power generator or as the propulsion engine of a ship. Depending on the engine size the cylinder liner can be manufactured in different sizes with cylinder bores typically ranging from 250 mm to 1000 mm and corresponding typical lengths ranging from 1000 mm to 4500 mm. The liner is normally manufactured from cast iron or from steel or cast steel which is provided with a sprayed wearing layer on the inner surface of the liner, and it may be integral or divided into at least two portions joined in extension of each other. In case of the divided liner it is also possible to manufacture the upper portion in another base material than the lower portion.

In a well-known manner the liner is mounted in the engine, only partially shown, by an annular downward-facing surface 3 being positioned on the top plate 4 in the engine frame box or cylinder block, whereupon a piston 5 is mounted in the cylinder liner, and a cylinder cover 6 is arranged on top of the liner on its annular upward-facing surface and clamped to the top plate by means of cover studs, not shown.

The lower section of the cylinder liner has an annular row of scavenge air ports, not shown. The piston is movable in the longitudinal direction of the liner between a top dead centre in which the upper piston surface 9 is located in a bore in the cylinder cover 6, and a bottom dead centre in which the upper piston surface 9 is located immediately below the lower end of the scavenge air ports.

Through a piston rod 10, a crosshead and a connecting rod the piston is connected with the engine crankshaft in a well-known manner. For every time that the crankshaft performs a rotation of 360° the piston is moved from the bottom dead centre to the top dead centre and back again.

In the upper section located between the surfaces 3 and 7, the cylinder liner 1 is formed with a larger external diameter, and at the top of this section many elongated cooling bores 14 are drilled up into the wall of the liner from an external recess 15 so that the longitudinal axes of the straight cooling bores extend obliquely or askew in relation to the longitudinal axis of the liner. In each cooling bore a pipe or baffle plate is inserted to guide the inflowing coolant from the recess 15 up to the upper dead end of the bore, from where the coolant flows downwards and out into a chamber 16, from where the coolant is passed into the cylinder cover via pipes 17. It should be noted that the cooling bores are drawn as if their longitudinal axes extend in the cutting plane, although in reality they extend obliquely in relation thereto. The recess 15 is enclosed by an annular cover plate 18. It is well-known that the cooling bores may have other designs, such as curved conduits embedded in the wall of the liner and opening out in a chamber at the top of the outer liner surface.

On its inner surface 13 the cylinder liner may be provided with one or more thermally sprayed-on hard wearing layers which may be of ceramics, a mixture of ceramics and metal, so-called cermet, or a wearing layer consisting of very hard particles embedded in a relatively soft metallic matrix. The matrix may, for example, include Cr, Ni and/or Mo, and the hard particles may, for example, be carbides, nitrides, borides and/or oxides. One of the wearing layers may also be a mixture of molybdenum and molybdenum oxide. It is moreover possible to provide the liner with an innermost soft running-in layer which may include graphite fixed in a binder of Ni, Mo, Al or Ag. It is also possible to omit the soft running-in layer on the inner liner surface which results in faster grinding-in of the piston rings, because in that case they slide directly on the hard wearing layer of the liner or on the cast base material of the liner. The cylinder liner may be manufactured with a wave-shaped pattern in its inner surface with the wave tops of the pattern being removed. It is possible to manufacture the liner with the said pattern along the whole inner surface. The pattern may also be machined only in an upper section of the liner, such as the section which is swept by the piston rings during the first 40% of the downward piston stroke. The section may also have other relative dimensions, such as 20%, 25%, 30% or 35% or intermediate values. The wave-shaped pattern helps to maintain the best possible lubrication conditions between the piston rings and the inner liner surface, lubricating oil being able to collect in the bottom of the wave troughs so as to provide the plateau areas between the troughs with lubricating oil. When the new piston rings are run-in in the new liner, the outer piston ring surfaces slide on the approximately plane plateau areas.

In Fig. 1 the piston 5 is shown in the top dead centre. The piston is provided with four piston rings generally designated 19, of which the top piston ring is a standard oblique cut ring or is of a gastight type, viz., the partition of the ring is designed so that gas is substantially prevented from flowing through the ring partition. This may be effected, for example, by one end of the ring having a flat projection passing into a corresponding recess at the other end of the ring. The second and the third piston ring from the top and the bottom piston ring may be conventional rings in which the ring partition is formed like a gap extending obliquely in the circumferential direction from the upper to the lower ring surface or may be of the approximately gastight type. In the context of the present invention the expression piston ring is used for a piston compression ring.

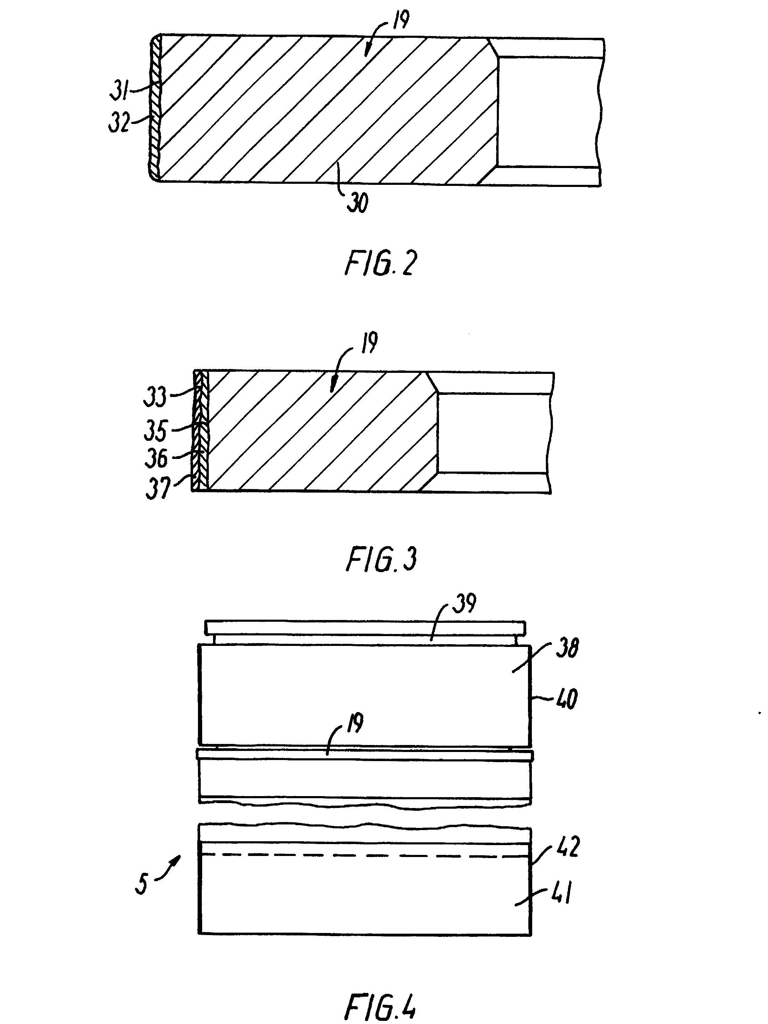

The piston ring 19 in Fig. 2 comprises a cast piston ring blank 30 of cast iron. On the outer radial surface 31 the member has been coated by thermal spraying with a running-in layer 32 in a thickness of at least 0.1 mm. The piston ring 19 in Fig. 3 comprises a cast piston ring member 34 of steel or cast steel. Since the member is not made of cast iron it is necessary to apply on the radial outer steel surface 35 a wearing layer 36 of a material having satisfactory sliding properties against the inner surface of the cylinder liner, such as one of the materials PM2, PM10, PM14, PM20, PM28 or L1 manufactured by the Swedish company DAROS AB. By means of thermal spraying a running-in layer 37 of a thickness of at least 0.1 mm has been applied to the radial outer surface 33 of the wearing layer. The running-in layers on the piston rings may also have a thickness larger than 0.1 mm, such as a thickness ranging from 0.13 to 3.0 mm, preferably at the most 2.0 mm.

Fig. 4 shows a segment of the piston 5 omitting the middle piston section. On the radial outer surface of the piston a soft layer 40 in a thickness of from 0.1 to 5 mm has been applied on an upper section 38 which extends from the annular groove for the top piston ring up to a slit 39 for mounting a piston lifting tool. The outermost part of this layer acts as a running-in layer, and the layer is of the same composition as the running-in layers used for the piston rings. The lower part of the piston consists of a piston skirt 41 bolted on to the upper part of the piston. The dividing face between the two parts is marked with a dotted line. The outer surface of the piston skirt has been coated with a running-in layer 42 in a thickness of at least 0.1 mm by means of thermal spraying.

It is very well-known to spray on layers of material on round objects by means of thermal spraying. This may be, for example, flame spraying, plasma spraying, HVOF spraying or arc spraying. Methods of spraying are described, for example, in EP-B 0 341 672, EP-A 0 203 556, W095/21994 and in W095/02023. At the spraying a filler may be used which may, for example, stated in percentage by weight and apart from commonly occurring impurities comprise one of the following compositions:
(a) from 5 to 60% of graphite and from 40 to 95% of Ni,
(b) from 5 to 60% of graphite and from 40 to 95% of Al,
(c) from 5 to 60% of graphite and from 40 to 95% of Si and/or Al, or
(d) from 5 to 60% of graphite, from 20 to 90% of Si and/or Al and from 5 to 15% of an organic binder.

A composition is preferred in which the filler comprises from 20 to 25% of graphite and from 75 to 80% of Ni and/or Al, or a composition in which the filler comprises from 15 to 25% of graphite and from 75 to 85% of Ni and/or Al.

### Example 1:

Four piston rings of cast iron and having an external diameter of just below 600 mm were fixed beside each other and were coated with a running-in layer by means of a standard plasma spraying apparatus of the make METCO. The distance between the spraying head and the outer surface of the piston rings was 115 mm, and a current of 500 A was used. The mutual rotation between the spraying head and the piston rings was set at 27 rpm and the feed in the axial direction of the rings was set at 7 mm per revolution. A powdery starting material of nickel-coated graphite balls of the composition 20% of graphite and 80% of nickel was supplied in a quantity of 95 g per minute, which deposited a layer of 0.02 mm per passage of the inner surface. The carrier gas used was nitrogen. The layer was built up to a thickness of 0.15 mm. The average hardness of the layer was measured at 140 HV30. The piston rings were separated and without further post-processing were mounted on a piston in a standard cylinder liner in a two-stroke crosshead engine. The engine had a normal maximum combustion pressure of 145 bar. After 30 minutes of initial operation at 15% load the load was increased to 100% over 15 minutes, whereupon operation continued for 1.5 h, the engine was stopped and the cylinder liner was inspected. No signs of actual seizures could be observed, either on the outer surfaces of the piston rings or on the inner surface of the liner. Ground-in facets could be observed in the outer surfaces of the piston rings, which indicates that the continued operation with the piston rings may take place without the formation of seizures. It could also be observed that part of the running-in layer from the piston rings had been deposited on the inner surface of the cylinder liner in the top quarter of the area swept by the piston rings.

### Example 2:

The cylindrical outer surface of a piston skirt for a two-stroke crosshead engine having a cylinder bore of 350 mm was coated with a running-in layer of the same type as described above in a thickness of 1 mm by means of flame spraying. After the coating the average hardness of the layer was measured at 75 HV30. The piston including the piston skirt was mounted in the engine in a conventional cylinder liner, and the cylinder was run in in the conventional manner. After the running-in, no seizures could be observed on the piston skirt.

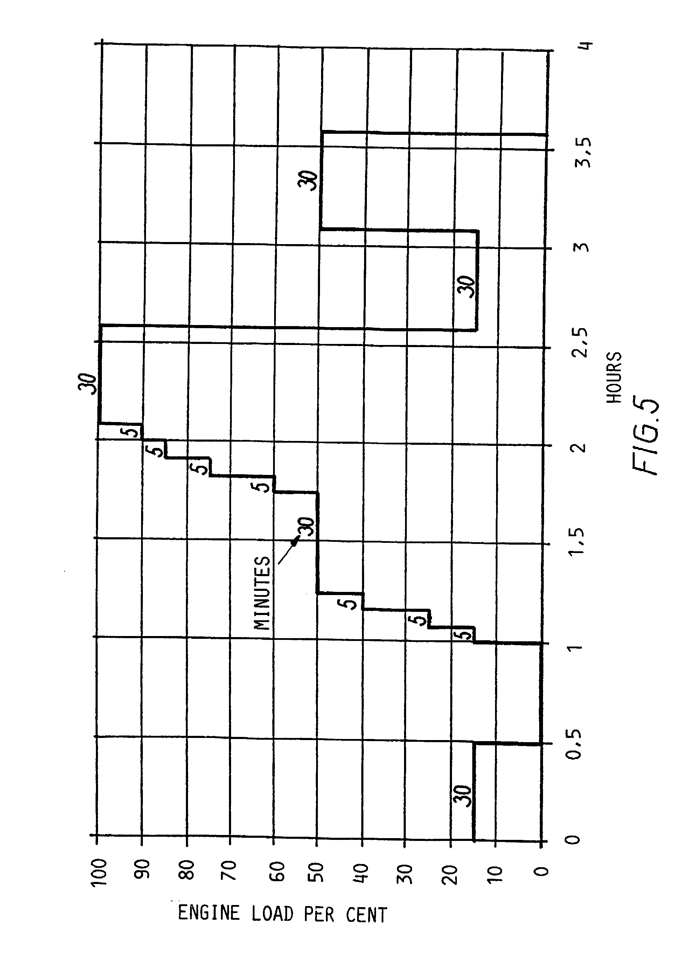

Fig. 5 illustrates an example of a method for running-in of a new diesel engine of the crosshead type, in which the piston rings of the engine are coated with a soft running-in layer of the above type. After assembly of the engine, operation is started by running for 30 minutes at a load of 15%, whereupon the engine is stopped and the condition of the piston rings is inspected. After a stop of 30 minutes, the load is increased at five-minute intervals from 15% to 25%, 40% and 50%, whereupon the engine is run for 30 minutes at a 50% load. Then without stopping the engine the load is increased at five-minute intervals to the loads 60%, 75%, 85%, 90% and finally 100%. Thus, the full engine load has been reached after a total operating time of slightly over 1.5 h. This rapid running-in to full load is rendered possible by the soft running-in layer on the piston rings. It is also possible to perform the running-in at other gradual load changes.

In an extraordinary experiment with an engine of the current type having a cylinder size of 350 mm and a normal maximum combustion pressure of 145 bar, initial operation for 30 minutes was performed at a load of 15% for running-in of the main bearings, whereupon the load was increased gradually to 100% over 15 minutes. The full load was maintained for 1 h, whereupon the engine was stopped and the condition of the piston rings was inspected. Surprisingly, no seizures were observed on the outer surface of the piston rings despite the extremely abrupt running-in.

The macro-hardness of the running-in layer depends on the composition of the layer and of the method of application. The macro-hardness depends on the micro-hardness of the individual constituents. The graphite in itself has no measurable micro-hardness, which means that the micro-hardness of the running-in layer is reduced at increasing graphite contents. The micro-hardness of the metallic binder depends on the method of application, and it may be mentioned that, for example, in nickel-graphite layers micro-hardnesses in the nickel phase of 100 HV have been measured when the layer is flame sprayed, and micro-hardnesses of up to 600 HV when the layer is plasma-sprayed. Thus, the macro-hardness of the running-in layer can be varied as required between 40 HV and 300 HV by varying the graphite content and by choosing flame spraying when a very soft layer is desired. If arc spraying is chosen, the layer becomes harder, with plasma spraying even harder, and hardest with HVOF spraying.

## Claims

1. Piston rings and/or a piston in an internal combustion engine of the diesel type, particularly a two-stroke crosshead engine, the maximum combustion pressure of which at full load exceeds 135 bar, and in which the piston (5) is provided with several, such as from three to five, piston rings (19) and is moved in a reciprocating movement in a cylinder liner (1) with a stroke of at least 750 mm, the piston rings having an external diameter of at least 250 mm in an assembled condition in annular grooves each of which is higher in the axial direction than the ring height, and each piston ring having a radial outer surface sliding along the inner surface (13) of the liner, **characterized** in that in a newly manufactured state the radial outer surface of the piston rings and/or a section of the radial outer surface of the piston (5) is/are provided with a running-in layer comprising a solid-state lubricant and a metallic binder, that the running-in layer (32, 37, 40, 42) has a thickness of at least 0.1 mm in the radial direction and is made of a material which, stated in percentage by weight and apart from commonly occurring impurities, includes from 5 to 60% of solid-state lubricant, such as graphite, and 40 to 95% of the metallic binder, such as Ni, Al, Si, and optionally up to 15% of an organic binder, and that the macro-hardness of the running-in layer is less than 300 HV30.

2. Piston rings and/or a piston according to claim 1, **characterized** in that the running-in layer (32) has been thermally sprayed on a cast piston ring or piston blank (30) of steel or cast iron.

3. Piston rings and/or a piston according to claim 2, **characterized** in that by thermal spraying the cast piston ring member of steel or cast iron has been coated with a wearing layer (36) of a material having a micro-hardness exceeding 1200 HV at certain points, and that the surface roughness produced by the spraying of the wearing layer is maintained until the running-in layer (37) has been sprayed onto the wearing layer.

4. Piston rings and/or a piston according to claim 2 or 3, **characterized** in that at the upper section (38) of the radial outer surface located between the annular groove for the top piston ring (19) and the piston top, the cast piston blank of steel or cast iron is provided with a thermally sprayed-on layer with an aggregate layer thickness ranging from 0.1 to 5 mm, of which the running-in layer (40) constitutes the outermost part of the layer.

5. Piston rings and/or a piston according to any one of claims 2-4, **characterized** in that the cast piston blank of steel or cast iron is provided with the thermally sprayed running-in layer (42) at the lower section (41) of the radial outer surface located between the annular groove of the bottom piston ring (19) and the lower end of the piston.

6. Piston rings and/or a piston according to any one of claims 2-5, **characterized** in that all the piston rings (19) have been coated with the running-in layer (32, 37) and that the piston (5) is coated with the running-in layer (42) at least in its lower section located below the annular groove for the bottom piston ring.

7. Piston rings and/or a piston according to any one of the preceding claims, **characterized** in that the running-in layer (32, 37) on the piston rings has a thickness ranging from 0.13 to 3.0 mm, preferably at the most 2.0 mm.

8. Piston rings and/or a piston according to any one of the preceding claims, **characterized** in that the filler used for thermal spraying of the running-in layer (32, 37, 40, 42) has a composition which may, stated in percentage by weight and apart from commonly occurring impurities, comprise one of the following compositions:
(a) from 5 to 60% of graphite and from 40 to 95% of Ni,
(b) from 5 to 60% of graphite and from 40 to 95% of Al,
(c) from 5 to 60% of graphite and from 40 to 95% of Si and/or Al, or
(d) from 5 to 60% of graphite, from 20 to 90% of Si and/or Al and from 5 to 15% of an organic binder.

9. Piston rings and/or a piston according to claim 8, **characterized** in that the filler includes from 15 to 25% of graphite and from 75 to 85% of Ni and/or Al.

10. A method for running-in of a two-stroke crosshead engine of the diesel type, the maximum combustion pressure of which at full load exceeds 100 bar, and in which in respect of at least one of the cylinders the engine has a cylinder liner (1) in which a piston (5) with several newly manufactured piston rings (19) is movable in a reciprocating movement with a stroke of at least 750 mm, each piston ring having an external diameter of at least 250 mm and a radial outer surface abutting the inner surface (13) of the liner, **characterized** in that the engine is started and brought up to full load within an aggregate operating period of at the most three hours, during which period at least part of a running-in layer (32, 37, 40, 42), which is positioned on the radial outer surface of the newly manufactured piston rings and/or a section of the radial outer surface of the piston before start of the engine, is transferred to the inner surface (13) of the liner, and which, before start of the engine, has a thickness in the radial direction of at least 0.1 mm and is made of a material having a macro-hardness of less than 300 HV30.

11. A method according to claim 10, **characterized** in that the engine, having a newly manufactured cylinder liner, is brought to full load at which the maximum combustion pressure exceeds 135 bar within the aggregate operating period of at the most three hours.

12. A method according to claim 10 or 11, **characterized** in that the engine is brought to full load within an aggregate operating period of at the most 1.5 h.

13. A method according to claim 10, **characterized** in that a piston with several newly-manufactured piston rings is mounted in a formerly used cylinder liner (1), and that the engine is started and brought to full load within an aggregate operating period of one hour at the most.

## Patentansprüche

1. Kolbenringe und/oder Kolben für eine Brennkraftmaschine vom Dieseltyp, insbesondere eine Zweitakt-Kreuzkopf-Brennkraftmaschine, deren maximaler Verbrennungsdruck bei Vollast 135 bar übersteigt und bei der der Kolben (5) mehrere, etwa 3 bis 5 Kolbenringe (19) aufweist und sich in einer Zylinderbüchse (1) mit einem Hub von wenigstens 750 mm hin- und herbewegt, wobei die Kolbenringe einen äußeren Durchmesser von 250 mm im einem zusammengebauten Zustand in den ringförmigen Nuten aufweisen, von denen jede in axialer Richtung höher ist als die Ringhöhe, und wobei der Kolbenring eine radiale äußere Oberfläche hat, die entlang der inneren Oberfläche (13) der Büchse gleitet, dadurch gekennzeichnet, daß im neu hergestellten Zustand die radiale äußere Oberfläche der Kolbenringe und/oder ein Bereich der radialen äußeren Oberfläche des Kolbens (5) mit einer Einlaufschicht versehen ist bzw. sind, welche ein Festzustandsgleitmittel und eine metallisches Bindemittel umfaßt, und daß die Einlaufschicht (32, 37, 40, 42) eine Dicke von wenigstens 0,1 mm in radialer Richtung aufweist und aus einem Material hergestellt ist, das, in Gewichtsprozent ausgedrückt und abgesehen von üblicherweise vorkommenden Verunreinigungen, 5 bis 60 % des Festzustandsgleitmittels, wie etwa Graphit, und 40 bis 95 % des metallischen Bindemittels, wie etwa Ni, Al, Si, und wahlweise bis zu 15 % eines organischen Bindemittels beinhaltet, und daß die Makrohärte der Einlaufschicht weniger als 300 HV30 beträgt.

2. Kolbenringe und/oder Kolben nach Anspruch 1, dadurch gekennzeichnet, daß die Einlaufschicht (32) auf einem gegoßenen Kolbenring- oder Kolbenrohling aus Stahl oder aus Gußeisen termoaufgesprüht ist.

3. Kolbenringe und/oder Kolben nach Anspruch 2, dadurch gekennzeichnet, daß durch Thermosprühen das Gußkolbenringteil aus Stahl oder Gußeisen mit einer Verschleißschicht (36) aus einem Material mit einer Mikrohärte beschichtet ist, die 1200 HV an bestimmten Stellen übersteigt, und daß die Oberflächenrauhigkeit, die durch das Aufsprühen der Verschleißschicht erzeugt ist, so lange aufrechterhalten bleibt, bis die Einlaufschicht (37) auf die Verschleißschicht aufgesprüht ist.

4. Kolbenringe und/oder Kolben nach Anspruch 2 oder 3, dadurch gekennzeichnet, daß an dem oberen Bereich (38) der radialen äußeren Oberfläche, angeordnet zwischen der ringförmigen Nut für den obersten Kolbering (19) und dem oberen Ende des Kolbens der Gußkolbenrohling aus Stahl oder Gußeisen mit einer thermoaufgesprühten Schicht mit einer .Gesamtschichtdicke im Bereich von 0,1 bis 5 mm versehen ist, deren äußersten Teil die Einlaufschicht (40) darstellt.

5. Kolbenringe und/oder Kolben nach einem der Ansprüche 2 bis 4, dadurch gekennzeichnet, daß der Gußkolbenrohling aus Stahl oder Gußeisen an dem unteren Bereich (41) der radialen äußeren Oberfläche, der sich zwischen der ringförmigen Nut des untersten Kolbenrings (19) und dem unteren Ende des Kolbens befindet, mit der thermoaufgesprühten Einlaufschicht (42) vorgesehen ist.

6. Kolbenringe und/oder Kolben nach einem der Ansprüche 2 bis 5, dadurch gekennzeichnet, daß alle Kolbenringe (19) mit der Einlaufschicht (32, 37) beschichtet sind und daß der Kolben (5) zumindest an seinem unteren Bereich, der sich unterhalb der ringförmigen Nut für den untersten Kolbenring befindet, mit der Einlaufschicht (42) beschichtet ist.

7. Kolbenringe und/oder Kolben nach einem der vorhergehenden Ansprüche, dadurch gekennzeichnet, daß die Einlaufschicht (32, 37) auf den Kolbenringen eine Dicke im Bereich von 0,13 bis 3,0 mm, bevorzugt maximal 2,0 mm hat.

8. Kolbenringe und/oder Kolben nach einem der vorhergehenden Ansprüche, dadurch gekennzeichnet, daß das zum Thermoaufsprühen der Einlaufschicht (32, 37, 40, 42) verwandte Füllmittel eine in Gewichtsprozent angegebene Zusammensetzung zeigt, die, abgesehen von üblichen Verunreinigungen, eine der folgenden Zusammensetzungen umfassen kann:
(a) 5 bis 60 % Graphit und 40 bis 95 % Ni,
(b) 5 bis 60 % Graphit und 40 bis 95 % Al,
(c) 5 bis 60 % Graphit und 40 bis 95 % Si und/oder Al oder
(d) 5 bis 60 % Graphit, 20 bis 90 % Si und/oder Al und 5 bis 15 % eines organischen Bindemittels.

9. Kolbenringe und/oder Kolben nach einem der vorhergehenden Ansprüche, dadurch gekennzeichnet, daß das Füllmittel 15 bis 25 % Graphit und 75 bis 85 % Ni und/oder Al beinhaltet.

10. Verfahren zum Einlaufenlassen einer Zweitakt-Kreuzkopf-Brennkraftmaschine vom Dieseltyp, deren maximaler Verbrennungsdruck bei Vollast 100 bar übersteigt und bei der in Bezug auf zumindest einen der Zylinder die Maschine eine Zylinderbüchse (1) aufweist, bei der ein Kolben (5) mit mehreren neu hergestellten Kolbenringen (19) in einer Hin- und Herbewegung bei einem Hub von wenigstens 750 mm beweglich ist, wobei jeder Kolbenring einen äußeren Durchmesser von wenigstens 250 mm und eine radiale äußere Oberfläche, die an die innere Oberfläche (13) der Büchse angrenzt, aufweist, dadurch gekennzeichnet, daß die Maschine gestartet und innerhalb einer Gesamtbetriebsdauer von maximal 3 Stunden auf Vollast gebracht wird, während der wenigstens ein Teil einer Einlaufschicht (32, 37, 40, 42) auf die innere Oberfläche (13) der Büchse übertragen wird, wobei die Einlaufschicht auf der radialen äußeren Oberfläche der neu hergestellten Kolbenringe und/oder eines Bereichs der radialen äußeren Oberfläche des Kolbens vor dem Start der Maschine aufgebracht ist und vor dem Start der Maschine eine Dicke in radialer Richtung von zumindest 0,1 mm hat und aus einem Material mit einer Makrohärte von weniger als 300 HV30 hergestellt ist.

11. Verfahren nach Anspruch 10, dadurch gekennzeichnet, daß die Maschine, die eine neu hergestellte Zylinderbuchse aufweist, innerhalb der Gesamtbetriebsdauer von maximal 3 Stunden auf Vollast gebracht wird, bei der der maximale Verbrennungsdruck 135 bar übersteigt.

12. Verfahren nach Anspruch 10 oder 11, dadurch gekennzeichnet, daß die Maschine auf Vollast innerhalb einer Gesamtbetriebsdauer von höchstens 1,5 h gebracht wird.

13. Verfahren nach Anspruch 10, dadurch gekennzeichnet, daß ein Kolben mit mehreren neu hergestellten Kolbenringen in eine zuvor gebrauchte Zylinderbüchse (1) montiert wird und daß die Maschine gestarted und auf Vollast innerhalb einer Gesamtbetriebsdauer von maximal 1 Stunde gebracht wird.

## Revendications

1. Segments de piston et/ou piston dans un moteur à combustion interne du type diesel, en particulier un moteur à crosse à deux temps, dont la pression maximale de combustion à plein régime dépasse 135 bars, et dans lequel le piston (5) est pourvu de plusieurs, par exemple entre trois et cinq, segments (19) de piston et est animé d'un mouvement de va-et-vient dans une chemise (1) de cylindre avec une course d'au moins 750 mm, les segments de piston ayant un diamètre extérieur d'au moins 250 mm dans un état d'assemblage dans des gorges annulaires dont chacune a, dans la direction axiale, une hauteur supérieure à la hauteur des segments, et chaque segment de piston ayant une surface extérieure radiale glissant sur la surface intérieure (13) de la chemise, **caractérisé(s)** en ce que, dans un état neuf de fabrication, la surface extérieure radiale des segments de piston et/ou une partie de la surface extérieure radiale du piston (5) est/sont pourvue(s) d'une couche de rodage comprenant un lubrifiant à l'état solide et un liant métallique, en ce que la couche de rodage (32, 37, 40, 42) a une épaisseur d'au moins 0,1 mm dans la direction radiale et est en matière qui, en pourcentage de poids et dehors des impuretés courantes, contient de 5 à 60% de lubrifiant à l'état solide, tel que du graphite, et 40 à 95% de liant métallique, tel que Ni, Al, Si et éventuellement jusqu'à 15% de liant organique, et en ce que la macrodureté de la couche de rodage est inférieure à 300 HV30.

2. Segments de piston et/ou piston selon la revendication 1, **caractérisé(s)** en ce que la couche de rodage (32) a été pulvérisée par voie thermique sur un segment de piston ou un piston ( 30) brut de moulage , en acier ou en fonte.

3. Segments de piston et/ou piston selon la revendication 2, **caractérisé(s)** en ce que, par pulvérisation par voie thermique, le segment de piston moulé en acier ou en fonte a été revêtu, en certains points, d'une couche d'usure (36) en matière à microdureté supérieure à 1200 HV, et en ce que la rugosité de surface créée par la pulvérisation de la couche d'usure est maintenue jusqu'à ce que la couche de rodage (37) ait été pulvérisée sur la couche d'usure.

4. Segments de piston et/ou piston selon la revendication 2 ou 3, **caractérisé(s)** en ce que, au niveau de la partie supérieure (38) de la surface extérieure radiale située entre la gorge annulaire pour le segment supérieur (19) de piston et le haut du piston, le piston brut de moulage en acier ou en fonte est pourvu d'une couche pulvérisée par voie thermique sur celui-ci, l'épaisseur globale des couches étant de 0,1 à 5 mm, la couche de rodage (40) en constituant la partie extérieure.

5. Segments de piston et/ou piston selon l'une quelconque des revendications 2 à 4 , **caractérisé(s)** en ce que le piston brut de moulage en acier ou en fonte est pourvu de la couche de rodage (42), pulvérisée par voie thermique, sur la partie inférieure (41) de la surface extérieure radiale située entre la gorge annulaire du segment inférieur (19) de piston et l'extrémité inférieure du piston.

6. Segments de piston et/ou piston selon l'une quelconque des revendications 2 à 5 , **caractérisé(s)** en ce que tous les segments (19) de piston ont été revêtus de la couche de rodage (32, 37) et en ce que le piston (5) est revêtu de la couche de rodage (42) au moins sur la partie inférieure située sous la gorge annulaire pour le segment inférieur de piston.

7. Segments de piston et/ou piston selon l'une quelconque des revendications précédentes , **caractérisé(s)** en ce que la couche de rodage (32, 37) présente sur les segments de piston a une épaisseur comprise entre 0,13 et 3,0 mm, de préférence de 2,0 mm maximum.

8. Segments de piston et/ou piston selon l'une quelconque des revendications précédentes, **caractérisé(s)** en ce que la charge utilisée pour la pulvérisation par voie thermique de la couche de rodage (32, 37, 40, 42) a une composition qui, exprimée en pourcentage de poids et en dehors des impuretés courantes, peut se présenter sous l'une des formes suivantes:
(a) de 5 à 60% de graphite et de 40 à 95% de Ni,
(b) de 5 à 60% de graphite et de 40 à 95% de Al,
(c) de 5 à 60% de graphite et de 40 à 95% de Si et/ou Al, ou
(d) de 5 à 60% de graphite, de 20 à 90% de Si et/ou Al et de 5 à 15% de liant organique.

9. Segments de piston et/ou piston selon la revendication 8 , **caractérisé(s)** en ce que la charge contient de 15 à 25% de graphite et de 75 à 85% de Ni et/ou Al.

10. Procédé pour roder un moteur à crosse à deux temps du type diesel, dont la pression maximale de combustion à plein régime dépasse 100 bars, et dans lequel, en ce qui concerne au moins un des cylindres, le moteur a une chemise (1) de cylindre dans laquelle un piston (5) ayant plusieurs segments (19) de piston nouvellement fabriqués peut aller et venir avec une course d'au moins 750 mm, chaque segment de piston ayant un diamètre extérieur d'au moins 250 mm et une surface extérieure radiale butant contre la surface intérieure (13) de la chemise,
**caractérisé** en ce que le moteur est lancé et porté à plein régime au cours d'une période globale de fonctionnement de trois heures maximum, période durant laquelle au moins une partie d'une couche de rodage (32, 37, 40, 42), qui est placée sur la surface extérieure radiale des segments de piston nouvellement fabriqués et/ou sur une partie de la surface extérieure radiale du piston avant le lancement du moteur, est transférée sur la surface intérieure (13) de la chemise, et qui, avant le lancement du moteur, a dans la direction radiale une épaisseur d'au moins 0,1 mm et est en matière a macrodureté inférieure à 300 HV30.

11. Procédé selon la revendication 10, **caractérisé** en ce que le moteur, ayant une chemise de cylindre nouvellement fabriquée, est porté à plein régime, la pression maximale de combustion dépassant 135 bars au cours de la période globale de fonctionnement de trois heures maximum.

12. Procédé selon la revendication 10 ou 11, **caractérisé** en ce que le moteur est porté à plein régime au cours d'une période globale de fonctionnement de 1,5 h maximum.

13. Procédé selon la revendication 10, **caractérisé** en ce qu'un piston avec plusieurs segments de piston nouvellement fabriqués est monté dans une chemise (1) de cylindre précédemment utilisée, et en ce que le moteur est lancé et porté à plein régime au cours d'une période globale de fonctionnement d'une heure maximum.
